# FASCICULE DE BREVET EUROPEEN

(11) **EP 1 997 580 B1**
(45) Date de publication et mention de la délivrance du brevet: **25.11.2009**
(21) Numéro de dépôt: 08290359.2
(22) Date de dépôt: 11.04.2008
(51) Int. Cl.: B23K 20/10, B29C 65/00, B29C 65/08, H01R 4/62, H01R 11/11, H01R 43/02, B23K 101/32, B23K 103/18

(54) **Procédé et dispositif pour souder une barre bus et des câbles par vibrations**
Verfahren und Vorrichtung zum Verschweißen einer Sammelschiene mit Kabeln durch Vibrationen
Method and device for welding a busbar and cables by vibrations

(30) Priorité: 29.05.2007 FR 0703774
(43) Date de publication de la demande: 03.12.2008
(73) Titulaire: Leoni Wiring Systems France, 78180 Montigny le Bretonneux (FR)
(72) Inventeur: Moly, José, 31150 Gratentour (FR)
(74) Mandataire: Eidelsberg, Olivier Nathan

(56) Documents cités:
- FR-A- 2 888 679
- US-A- 3 784 079
- US-A- 4 746 051
- US-A1- 2004 216 829

## Description

La présente invention se rapporte à des procédés et à un dispositif pour souder par ultrason une barre bus, de préférence de forme sensiblement rigide, par exemple en aluminium, à au moins un brin d'un câble, de préférence souple, notamment en cuivre conformément au préambule des revendications 1 à 3 et 8 (voir, par example, FR 2 888 679).

On sait déjà, dans l'art antérieur, souder par ultrason une barre bus et des brins de câbles souples en utilisant une sonotrode. Dans l'art antérieur il est connu des procédés qui mémorisent une courbe représentative de la soudure d'un échantillon témoin. Si après contrôle de cet échantillon la soudure est considérée comme étant correcte alors l'ensemble des soudures sera réalisé en prenant comme courbe de référence la courbe de l'échantillon témoin. Toutes les soudures dont la courbe de soudure rentre dans un gabarit correspondant à une tolérance de +ou -X % de la courbe de l'échantillon initial sont alors considérées comme correctes. (Voir brevet US 2004/216829a).

La barre bus à souder aux brins de câble comporte, de préférence, une partie d'extrémité méplate ayant au moins une face plate qui est posée sur l'enclume de la sonotrode par la face plate, tandis que sur une autre face on dispose une partie des brins des câbles souples à souder, et on applique une vibration à l'aide de la partie active de la sonotrode, qui notamment est une sonotrode rotative. Cette partie active a un mouvement périodique, notamment sinusoïdal, qui fait vibrer les brins contre la barre bus et soude ainsi par ultrason les brins du câble à la barre bus.

Après un certain temps, en général inférieur à la seconde, le matériau des brins des câbles est échauffé, de sorte que le métal est rendu plus malléable et le glissement relatif des câbles sur la barre bus s'effectue avec plus de difficulté. Ainsi, pendant la soudure, les deux pièces (la barre d'une part et le ou les brins du câble d'autre part) sont compactées l'une contre l'autre et pénètrent l'une dans l'autre (par exemple le cuivre pénètre dans l'aluminium dans le cas de câbles en cuivre et d'une barre en aluminium). Cependant, la nature différente des matériaux fait que la soudure à ultrason est difficile à réaliser, et en particulier il est difficile de régler correctement l'énergie qu'il convient d'appliquer par la sonotrode, ainsi que les autres paramètres, tels que la pression, la durée et la course de sorte qu'il peut arriver que la soudure soit mal réalisée, chose dont on ne s'aperçoit qu'ultérieurement et qui peut être source de pannes futures dans les systèmes électriques ou de transmission de données se faisant par l'intermédiaire de cette liaison, notamment dans une automobile.

La présente invention vise à surmonter les inconvénients des procédés et dispositifs de l'art antérieur en proposant un dispositif et un procédé de soudure de deux pièces du genre mentionné précédemment, qui permet d'être assuré que la soudure est réalisée de manière optimale pour deux matériaux donnés à souder l'un à l'autre. En particulier, on pourra maintenant s'assurer que l'on a fourni suffisamment d'énergie ou de puissance pour effectuer la soudure et, en même temps, sans que, pour être sur de réaliser convenablement la soudure, on en ait fourni plus que nécessaire.

Suivant l'invention, un procédé pour souder une première pièce en un premier matériau métallique, notamment une barre de forme sensiblement rigide, et une deuxième pièce en un deuxième matériau métallique, notamment des brins de câble souples, par exemple en cuivre, dans lequel on dispose une partie de la surface extérieure de la barre sur une enclume d'une sonotrode et on presse avec vibration par une partie active de la sonotrode les brins des câbles contre une autre partie de la surface extérieure de la barre, une puissance étant fournie par la partie active de la sonotrode pour compacter les deux matériaux l'un contre l'autre, est caractérisé en ce qu'il comporte les étapes dans lesquelles on relève, pour chaque couple des premier et deuxième matériaux métalliques donnés, par exemple le couple cuivre-aluminium, la courbe donnant la puissance fournie par la sonotrode en fonction du temps écoulé, on approxime la courbe obtenue à l'aide de deux droites qui se succèdent, la deuxième droite ayant une pente supérieure à la pente de la première droite, l'intersection des deux droites définissant un point de changement de pente de la courbe de puissance ; et on effectue la soudure pendant une durée telle que le point de changement de pente soit atteint ou dépassé.

Suivant un autre aspect de l'invention, un procédé pour souder une première pièce en un premier matériau métallique, notamment une barre de forme sensiblement rigide, et une deuxième pièce en un deuxième matériau métallique, notamment des brins de câble souples, par exemple en cuivre, dans lequel on dispose une partie de la surface extérieure de la barre sur une enclume d'une sonotrode et on presse avec vibration par une partie active de la sonotrode les brins des câbles contre une autre partie de la surface extérieure de la barre, est caractérisé en ce qu'il comporte les étapes dans lesquelles on relève, pour chaque couple des premier et deuxième matériaux donnés, par exemple le couple cuivre-aluminium la courbe donnant la pression ou force exercée par la sonotrode en fonction du temps écoulé, on approxime la courbe obtenue à l'aide de deux droites qui se succèdent, la deuxième droites ayant une pente supérieure à la pente de la première droite, l'intersection des deux droites définissant un point de changement de pente de la courbe de pression ; et on effectue la soudure pendant une durée telle que le point de changement de pente soit atteint ou dépassé.

Suivant un autre aspect encore de l'invention, un procédé pour souder une première pièce en un premier matériau métallique, notamment une barre de forme sensiblement rigide, et une deuxième pièce en un deuxième matériau métallique, notamment des brins de câble souples, par exemple en cuivre, dans lequel on dispose une partie de la surface extérieure de la barre sur une enclume d'une sonotrode et on presse avec vibration par une partie active de la sonotrode les brins des câbles contre une autre partie de la surface de la barre, est caractérisé en ce qu'il comporte les étapes dans lesquelles on relève, pour chaque couple des premier et deuxième matériaux donnés, la courbe donnant la course d'enfoncement relatif des matériaux l'un dans l'autre en fonction du temps écoulé, on approxime la courbe obtenue à l'aide de deux droites qui se succèdent, la deuxième droite ayant une pente supérieure à la pente de la première droite, l'intersection des deux droites ou droites définissant un point de changement de pente de la courbe de course ; et on effectue la soudure pendant une durée telle que le point de changement de pente soit atteint ou dépassé.

Ainsi, en suivant la courbe de la puissance, de la force ou de la course et en s'assurant que la durée de l'action de la sonotrode atteint ou dépasse la durée correspondant au changement de pente, on s'assure d'obtenir une excellente tenue mécanique à l'arrachement des deux pièces métalliques soudées l'une à l'autre. En outre, une fois ce point atteint, on peut cesser le fonctionnement de la sonotrode sans craindre que la soudure n'ait été réalisée de manière optimale.

En particulier, dans le cas d'une soudure d'un matériau en cuivre avec un matériau en aluminium, on obtient une tenue mécanique qui est d'au moins 20 newtons par mm².

La valeur de la tenue de la soudure de 20N/mm² correspond à la tenue optimum pour le couple Cu/Al dans les nuances d'alliages utilisées (Cu et Al).

Cette valeur est différente pour chaque couple de métaux soudés. Cette valeur nous assure la meilleure soudure par unité de surface, pour obtenir une valeur nécessaire à une application, il faut calculer la surface correspondante, exemple : si l'on veut qu'une soudure résiste à une traction de 2000N, il faut que la soudure ait une surface de 100 mm² (2000/20). Connaître la valeur optimum des soudures permet de déterminer la surface minimum des pièces à souder.

Suivant un perfectionnement de l'invention, on trace et on lisse les courbes de puissance, force ou course en temps réel et on cesse l'action de la sonotrode lorsque le point de changement de pente a été déterminé comme étant atteint et/ou dépassé.

De préférence, on cesse l'action de la sonotrode quand le point de changement de pente est atteint et est dépassé d'une constante définie à l'avance.

La présente invention se rapporte également à un dispositif pour mettre en oeuvre un procédé suivant l'invention.

Suivant l'invention, un dispositif destiné à souder par ultrason une première pièce, notamment une barre, notamment sensiblement rigide, par exemple en aluminium, et une deuxième pièce, notamment un brin ou des brins d'un câble, notamment souple, de préférence en cuivre, comportant une enclume destinée à porter contre la première pièce sur une première surface de celle-ci et une partie active à laquelle on fait subir un mouvement périodique de vibration pour compacter la deuxième pièce contre une autre surface de la première pièce, le dispositif étant caractérisé en ce qu'il comporte des moyens pour déterminer le tracé donnant la puissance fournie par la sonotrode en fonction du temps, des moyens pour en déduire par estimation de la courbe obtenue deux droites successives ayant une première pente et une deuxième pente supérieure à la première pente, et des moyens d'interruption du fonctionnement de la sonotrode qui comporte des moyens de réglages destinés à régler les moyens d'interruption de manière à interrompre le fonctionnement lorsque a lieu le changement de pente.

De préférence, le dispositif comporte des moyens temporisateur destinés à retarder l'interruption d'une durée définie à l'avance, après l'instant auquel le changement de pente a eu lieu.

A titre d'exemple uniquement, on décrit maintenant un mode de réalisation de l'invention en se reportant aux dessins, dans lesquels :
à la Figure 1, il est représenté un schéma de principe d'un dispositif suivant l'invention ;
à la Figure 2, la courbe obtenue donnant la puissance, l'effort ou la course de la sonotrode en fonction du temps.

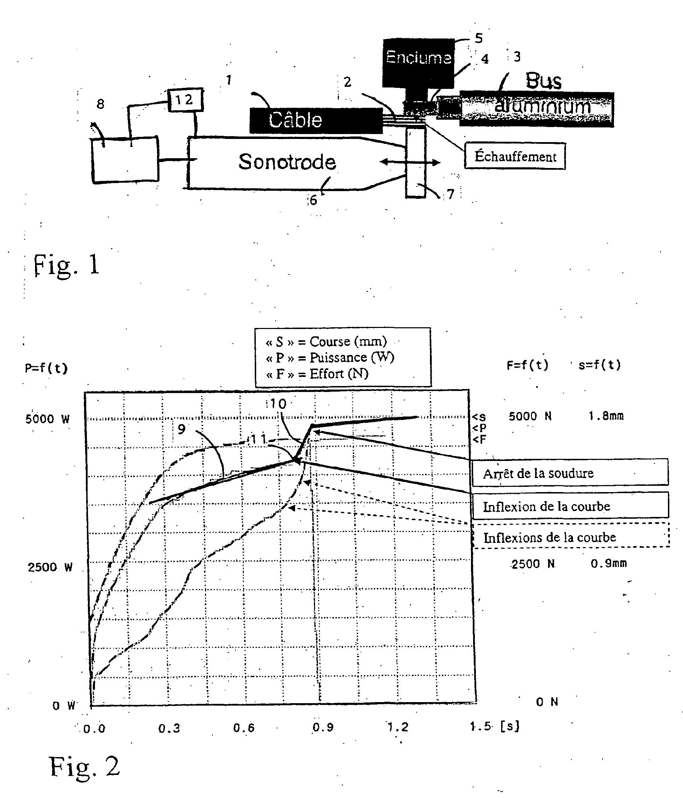

A la Figure 1, on peut voir une installation ou dispositif suivant l'invention pour souder un câble 1 multibrins en cuivre, comportant une pluralité de brins 2, à une barre bus 3 sensiblement rigide, en aluminium, de forme cylindrique circulaire et comportant à son extrémité une partie 4 méplate comportant deux surfaces plates opposées. L'une des surfaces plates de la partie 4 méplate (la surface supérieure à la figure) est en contact avec une enclume 5 pour la maintenir, tandis que les brins 2 du câble 1 sont disposés sur l'autre face de la partie méplate et sont pressés par une partie 7 active d'une sonotrode 6 contre la barre 10 en aluminium. La sonotrode donne un mouvement de vibration à la partie 7 active qui va ainsi faire glisser avec vibration les brins contre la barre en aluminium, elle même maintenue en place par l'enclume. La sonotrode fournit ainsi une puissance P au cours du temps.

Un circuit 8 de mesure, représenté de manière schématique à la Figure 1, permet de relever la valeur de la puissance fournie par la sonotrode en fonction du temps. On obtient ainsi la courbe représentée à la Figure 2. Dans le circuit 8, il peut également être prévu des moyens de calcul destinés à déterminer deux droites 9 et 10 qui approximent le tracé de la courbe de la puissance en fonction du temps et qui se coupent en un point 11 correspondant à un changement de pente ou de direction de la courbe.

Le dispositif comporte également des moyens 12 d'interruption du fonctionnement de la sonotrode. Ils sont reliés au circuit 8. Une fois le point 11 déterminé, le réglage des moyens 12 d'interruption est effectué, de sorte que ceux-ci cessent de faire fonctionner la sonotrode à un instant t au delà de l'instant t0 correspondant à la puissance au point 11.

On s'assure ainsi que l'on a obtenu une bonne soudure à ultrason et qu'en même temps on ne poursuit pas indéfiniment les vibrations, alors même que cela ne sert plus à rien, sinon à consommer de l'énergie inutilement.

Lors des vibrations, les métaux sont échauffés et sont ainsi rendus plus malléables, de sorte que le glissement relatif des câbles en cuivre sur la barre en aluminium s'effectue avec plus de difficulté. Pour obtenir une même amplitude de vibration, la machine doit ainsi fournir plus de puissance. C'est pourquoi on a, à ce moment-là, un changement de pente dans la courbe de puissance. Les inventeurs de la présente demande ont compris pour la première fois qu'une fois ce point passé, la soudure est en fait réalisée. C'est la couche intermétallique qui assure la soudure, et comme cette couche est très fine (de l'ordre du micromètre), toute course supplémentaire n'apporte pas de gain sur la qualité de la soudure et c'est pourquoi on peut, à partir de ce moment-là, cesser de faire fonctionner la sonotrode. Ainsi, pour réaliser une bonne soudure, il suffit d'atteindre ou de passer le point de changement de direction en mesurant la course correspondante pour chaque couple de pièces à souder.

Le phénomène ainsi présenté est très visible pour le couple cuivre-aluminium. Il convient de noter qu'il est également visible pour tout autre type de couple de matériaux métalliques. Il peut, cependant, être moins visible et il convient alors de modifier l'échelle de la courbe pour pouvoir le voir. Cependant il existe.

On peut réaliser le procédé suivant l'invention soit en calculant à l'avance, pour un couple de matériaux donnés, le temps qu'il convient de faire fonctionner la sonotrode. Ou on peut également asservir le moteur de la sonotrode en utilisant un circuit de mesure en temps réel de la puissance en fonction du temps et un lissage en temps réel du couple pour obtenir le calcul en temps réel du point de changement de direction.

## Revendications

1. Procédé pour souder une première pièce (3) en un premier matériau métallique, notamment une barre (3) de forme sensiblement rigide, et une deuxième pièce (1) en un deuxième matériau métallique, notamment des brins (2) de câble (1) souples, par exemple en cuivre, dans lequel on dispose une partie de la surface extérieure de la premiere pièce (3) sur une enclume (5) d'une sonotrode (6) et on presse avec vibration par une partie active de la sonotrode (7) la deuxieme pièce (1) contre une autre partie de la surface extérieure de la premiere pièce (3), une puissance étant fournie par la partie active de la sonotrode (6) pour compacter les deux matériaux l'un contre l'autre, **caractérisé en ce qu'**il comporte les étapes dans lesquelles on relève, pour chaque couple des premier et deuxième matériaux métalliques donnés, par exemple le couple cuivre-aluminium, la courbe donnant la puissance fournie par la sonotrode (6) en fonction du temps écoulé, on approxime la courbe obtenue à l'aide de deux droites (9,10) qui se succèdent, la deuxième droite (10) ayant une pente supérieure à la pente de la première droite (9), l'intersection (11) des deux droites (9,10) définissant un point de changement de pente de la courbe de puissance ; et on effectue la soudure pendant une durée telle que le point de changement de pente (11) soit atteint ou dépassé.

2. Procédé pour souder une première pièce (3) en un premier matériau métallique, notamment une barre de forme sensiblement rigide, et une deuxième pièce (1) en un deuxième matériau métallique, notamment des brins de câble souples, par exemple en cuivre, dans lequel on dispose une partie de la surface extérieure de la premiere pièce (3) sur une enclume (5) d'une sonotrode (6) et on presse avec vibration par une partie active (7) de la sonotrode (6) la deuxieme pièce (1) contre une autre partie de la surface extérieure de la premiere pièce (3), **caractérisé en ce qu'**il comporte les étapes dans lesquelles on relève, pour chaque couple des premier et deuxième matériaux donnés, par exemple le couple cuivre-aluminium la courbe donnant la pression ou force exercée par la sonotrode (6) en fonction du temps écoulé, on approxime la courbe obtenue à l'aide de deux droites (9,10) qui se succèdent, la deuxième droite (10) ayant une pente supérieure à la pente de la première droite (9), l'intersection (11) des deux droites définissant un point de changement de pente (11) de la courbe de pression ; et on effectue la soudure pendant une durée telle que le point de changement de pente (11) soit atteint ou dépassé.

3. Procédé pour souder une première pièce (3) en un premier matériau métallique, notamment une barre (3) de forme sensiblement rigide, et une deuxième pièce (1) en un deuxième matériau métallique, notamment des brins (2) de câble (1) souples, par exemple en cuivre, dans lequel on dispose une partie de la surface extérieure de la premiere pièce (3) sur une enclume (5) d'une sonotrode (6) et on presse avec vibration par une partie active (7) de la sonotrode (6) la deuxième pièce (1) contre une autre partie de la surface de la premiere pièce (3), **caractérisé en ce qu'**il comporte les étapes dans lesquelles on relève, pour chaque couple des premier et deuxième matériaux donnés, la courbe donnant la course d'enfoncement relatif des matériaux l'un dans l'autre en fonction du temps écoulé, on approxime la courbe obtenue à l'aide de deux droites (9,10) qui se succèdent, la deuxième droite (10) ayant une pente supérieure à la pente de la première droite (9), l'intersection (11) des deux droites ou droites définissant un point de changement de pente (11) de la courbe de course ; et on effectue la soudure pendant une durée telle que le point de changement de pente (11) soit atteint ou dépassé.

4. Procédé suivant l'une des revendications 1 à 3, **caractérisé en ce qu'**on trace et on lisse les courbes de puissance, force ou course en temps réel et on cesse l'action de la sonotrode (6) lorsque le point de changement de pente (11) a été déterminé comme étant atteint et/ou dépassé.

5. Procédé suivant l'une des revendications 1 à 4, **caractérisé en ce qu'**on cesse l'action de la sonotrode (6) quand le point de changement de pente (11) est atteint et est dépassé d'une constante définie à l'avance.

6. Procédé suivant l'une des revendications 1 à 5, **caractérisé en ce que** les deux parties de surface sont opposées l'une de l'autre.

7. Procédé suivant l'une des revendications 1 à 6, **caractérisé en ce que** les deux parties de surface sont plates.

8. Dispositif destiné à souder par ultrason une première pièce (3), notamment une barre (3), notamment sensiblement rigide, par exemple en aluminium, et une deuxième pièce (1), notamment un brin (2) ou des brins (2) d'un câble (1), notamment souple, de préférence en cuivre, comportant une enclume (5) destinée à porter contre la première pièce (3) sur une première surface de celle-ci et une partie active (7) à laquelle on fait subir un mouvement périodique de vibration pour compacter la deuxième pièce (3) contre une autre surface de la première pièce (3), le dispositif étant **caractérisé en ce qu'**il comporte des moyens (8) pour déterminer le tracé donnant la puissance fournie par la sonotrode (6) en fonction du temps, des moyens pour en déduire par estimation de la courbe obtenue deux droites (9,10) successives ayant une première pente et une deuxième pente supérieure à la première pente, et des moyens (12) d'interruption du fonctionnement de la sonotrode (6) qui comporte des moyens de réglages destinés à régler les moyens d'interruption de manière à interrompre le fonctionnement lorsque a lieu le changement de pente.

9. Dispositif suivant la revendication 9, **caractérisé en ce que** le dispositif comporte des moyens temporisateur destinés à retarder l'interruption d'une durée définie à l'avance, après l'instant auquel le changement de pente a eu lieu.

## Claims

1. Method for welding a first component (3) made of a first metal material, in particular a substantially rigid bar (3), and a second component (1) made of a second metal material, in particular portions (2) of flexible cable (1), made of copper for example, in which part of the outer surface of the first component (3) is arranged on a front contact (5) of a sonotrode (6) and the second component (1) is pressed with vibration by an active part of the sonotrode (6) against another part of the outer surface of the first component (3), power being supplied by the active part of the sonotrode (6) to compact the two materials against one another, **characterised in that** it comprises steps in which for each couple of given first and second metal materials, for example the couple copper-aluminium, the curve showing the power supplied by the sonotrode (6) as a function of the time passed is raised, the curve obtained is approximated by means of two successive sections (9, 10), the second section (10) having a gradient that is steeper than the gradient of the first section (9), the intersection (11) of the two sections (9, 10) defining a point of change in the gradient of the power curve, and welding is performed during a period such that the point of change in the gradient (11) has either been reached or passed.

2. Method for welding a first component (3) made of a first metal material, in particular a substantially rigid bar, and a second component (1) made of a second metal material, in particular portions of flexible cable, made of copper for example, in which part of the outer surface of the first component (3) is arranged on a front contact (5) of a sonotrode (6) and the second component (1) is pressed with vibration by an active part (7) of the sonotrode (6) against another part of the outer surface of the first component (3), **characterised in that** it comprises steps in which for each couple of given first and second metal materials, for example the couple copper-aluminium, the curve showing the pressure or force exerted by the sonotrode (6) as a function of time passed is raised, the curve obtained is approximated by means of two successive sections (9, 10), the second section (10) having a gradient that is steeper than the gradient of the first section (9), the intersection (11) of the two sections (9, 10) defining a point of change in the gradient (11) of the pressure curve, and welding is performed during a period such that the point of change in the gradient (11) has either been achieved or passed.

3. Method for welding a first component (3) made of a first metal material, in particular a substantially rigid bar (3), and a second component (1) made of a second metal material, in particular portions (2) of flexible cable (1), made of copper for example, in which part of the outer surface of the first component (3) is arranged on a front contact (5) of a sonotrode (6) and the second component (1) is pressed with vibration by an active part (7) of the sonotrode (6) against another part of the outer surface of the first component (3), **characterised in that** it comprises steps in which for each couple of given first and second metal materials, the curve showing the course of the relative driving of the materials into one another as a function of time passed is raised, the curve obtained is approximated by means of two successive sections (9, 10), the second section (10) having a gradient that is steeper than the gradient of the first section (9), the intersection (11) of the two sections (9, 10) defining a point of change in the gradient (11) of the flow of the curve, and welding is performed during a period such that the point of change in the gradient (11) has either been achieved or passed.

4. Method according to one of claims 1 to 3, **characterised in that** the power, force or flow curves are plotted or smoothed in real time and the action of the sonotrode (6) is ceased when the change point of the gradient (11) has been determined to have been achieved and/or passed.

5. Method according to one of claims 1 to 4, **characterised in that** the action of the sonotrode (6) is ceased when the point of change in the gradient (11) has been achieved and passed by a constant defined in advance.

6. Method according to one of claims 1 to 5, **characterised in that** the two surface parts are opposite one another.

7. Method according to one of claims 1 to 6, **characterised in that** the two surface parts are flat.

8. Device designed to weld by ultrasound a first component (3), in particular a substantially rigid bar (3), made of aluminium for example and a second component (1), in particular a flexible portion (2) or portions (2)of a cable (1), preferably made of copper, comprising a first contact (5) designed to bear against the first component (3) on a first surface of the latter and an active part (7) which is subjected to a periodic vibration movement to compact the second component (1) against another surface of the first component (3), the device being **characterised in that** it comprises means (8) for determining the line showing the power supplied by the sonotrode (6) as a function of time, means for deducing by estimation the curve obtained, two successive sections (9, 10) having a first gradient and a second gradient that is steeper than the first gradient and means (12) for interrupting the functioning of the sonotrode (6) which comprises control means designed to regulate the interruption means so as to interrupt the functioning when there has been a change in the gradient.

9. Device according to claim 9, **characterised in that** the device comprises retarding means intended to slow down the interruption of a period defined in advance, after the instant at which the change in gradient has taken place.

## Patentansprüche

1. Verfahren zum Verschweißen eines ersten Teils (3) aus einem ersten metallischen Material, insbesondere eines Stabs (3) in im Wesentlichen steifer Form, und eines zweiten Teils (1) aus einem zweiten metallischen Material, insbesondere flexibler Adern (2) eines Kabels (1), beispielsweise aus Kupfer, bei dem ein Bereich der Außenfläche des ersten Teils (3) auf einem Amboss (5) einer Sonotrode (6) positioniert wird und bei Ausführung von Schwingungen durch einen aktiven Teil der Sonotrode (7) das zweite Teil (1) gegen einen anderen Bereich der Außenfläche des ersten Teils (3) gepresst wird, wobei eine Leistung durch den aktiven Teil der Sonotrode (6) abgegeben wird, um die beiden Materialien aneinander zu kompaktieren, **dadurch gekennzeichnet, dass** es die Schritte umfasst, bei denen für jedes Paar aus dem ersten gegebenen metallischen Material und dem zweiten gegebenen metallischem Material, beispielsweise das Kupfer-Aluminium-Paar, die Kurve, welche die von der Sonotrode (6) abgegebene Leistung in Abhängigkeit von der verstrichenen Zeit angibt, aufgenommen wird, die erhaltene Kurve mittels zweier aufeinander folgender Geraden (9, 10) angenähert wird, wobei die zweite Gerade (10) eine Steigung aufweist, die größer ist als die Steigung der ersten Geraden (9), wobei der Schnittpunkt (11) der beiden Geraden (9, 10) einen Punkt der Änderung der Steigung der Leistungskurve definiert; und das Verschweißen während einer Dauer erfolgt, die derart ist, dass der Punkt (11) der Änderung der Steigung erreicht oder überschritten wird.

2. Verfahren zum Verschweißen eines ersten Teils (3) aus einem ersten metallischen Material, insbesondere eines Stabs in im Wesentlichen steifer Form, und eines zweiten Teils (1) aus einem zweiten metallischen Material, insbesondere flexibler Kabeladern, beispielsweise aus Kupfer, bei dem ein Bereich der Außenfläche des ersten Teils (3) auf einem Amboss (5) einer Sonotrode (6) positioniert wird und bei Ausführung von Schwingungen durch einen aktiven Teil (7) der Sonotrode (6) das zweite Teil (1) gegen einen anderen Bereich der Außenfläche des ersten Teils (3) gepresst wird, **dadurch gekennzeichnet, dass** es die Schritte umfasst, bei denen für jedes Paar aus dem ersten gegebenen metallischen Material und dem zweiten gegebenen metallischem Material, beispielsweise das Kupfer-Aluminium-Paar, die Kurve, welche den von der Sonotrode (6) ausgeübten Druck oder die von der Sonotrode (6) ausgeübte Kraft in Abhängigkeit von der verstrichenen Zeit angibt, aufgenommen wird, die erhaltende Kurve mittels zweier aufeinander folgender Geraden (9, 10) angenähert wird, wobei die zweite Gerade (10) eine Steigung aufweist, die größer ist als die Steigung der ersten Geraden (9), wobei der Schnittpunkt (11) der beiden Geraden einen Punkt der Änderung der Steigung (11) der Druckkurve definiert; und das Verschweißen während einer Dauer erfolgt, die derart ist, dass der Punkt der Änderung der Steigung (11) erreicht oder überschritten wird.

3. Verfahren zum Verschweißen eines ersten Teils (3) aus einem ersten metallischen Material, insbesondere eines Stabs (3) in im Wesentlichen steifer Form, und eines zweiten Teils (1) aus einem zweiten metallischen Material, insbesondere flexibler Adern (2) eines Kabels (1), beispielsweise aus Kupfer, bei dem ein Bereich der Außenfläche des ersten Teils (3) auf einem Amboss (5) einer Sonotrode (6) positioniert wird und bei Ausführung von Schwingungen durch einen aktiven Teil (7) der Sonotrode (6) das zweite Teil (1) gegen einen anderen Bereich der Fläche des ersten Teils (3) gepresst wird, **dadurch gekennzeichnet, dass** es die Schritte umfasst, bei denen für jedes Paar aus dem ersten gegebenen metallischen Material und dem zweiten gegebenen metallischem Material die Kurve, welche den Verlauf des relativen Ineinanderdringens der Materialien in Abhängigkeit von der verstrichenen Zeit angibt, aufgenommen wird, die erhaltene Kurve mittels zweier aufeinander folgender Geraden (9, 10) angenähert wird, wobei die zweite Gerade (10) eine Steigung aufweist, die größer ist als die Steigung der ersten Gerade (9), wobei der Schnittpunkt (11) der beiden Geraden oder der Geraden einen Punkt der Änderung der Steigung (11) der Verlaufskurve definiert; und das Verschweißen während einer Dauer erfolgt, die derart ist, dass der Punkt der Änderung der Steigung (11) erreicht oder überschritten wird.

4. Verfahren nach einem der Ansprüche 1 bis 3, **dadurch gekennzeichnet, dass** die Leistungs-, Kraft- oder Verlaufskurven in Echtzeit aufgezeichnet und geglättet werden und das Wirken der Sonotrode (6) gestoppt wird, wenn der Punkt der Änderung der Steigung (11) als erreicht und/oder überschritten bestimmt worden ist.

5. Verfahren nach einem der Ansprüche 1 bis 4, **dadurch gekennzeichnet, dass** das Wirken der Sonotrode (6) gestoppt wird, wenn der Punkt der Änderung der Steigung (11) erreicht ist und um eine vorbestimmte Konstante überschritten ist.

6. Verfahren nach einem der Ansprüche 1 bis 5, **dadurch gekennzeichnet, dass** die zwei Flächenbereiche einander gegenüberliegen.

7. Verfahren nach einem der Ansprüche 1 bis 6, **dadurch gekennzeichnet, dass** die zwei Flächenbereiche eben sind.

8. Vorrichtung zum Ultraschallverschweißen eines ersten Teils (3) aus einem ersten metallischen Material, insbesondere eines Stabs (3) in einer im Wesentlichen steifen Form, beispielsweise aus Aluminium, und eines zweiten Teils (1) aus einem zweiten metallischen Material, insbesondere einer Ader (2) oder Adern (2) eines insbesondere flexiblen Kabels (1), vorzugsweise aus Kupfer, mit einem Amboss (5), der dafür bestimmt ist, gegen das erste Teil (3) an einer ersten Fläche dieses Teils zur Anlage zu kommen, und mit einem aktiven Teil (7), der in eine periodische Schwingungsbewegung versetzt wird, um das zweite Teil (1) an einer anderen Fläche des ersten Teils (3) zu kompaktieren, wobei die Vorrichtung **dadurch gekennzeichnet ist, dass** sie Mittel (8) zum Bestimmen des Verlaufs, der die von der Sonotrode (6) abgegebene Leistung in Abhängigkeit von der verstrichene Zeit angibt, Mittel, um durch Schätzen der erhaltenen Kurve zwei aufeinander folgende Geraden (9, 10) mit einer ersten Steigung und einer zweiten Steigung, die größer ist als die erste Steigung, abzuleiten, und Mittel (12) zum Unterbrechen des Betriebs der Sonotrode (6) aufweist, welche Steuermittel umfasst, die dazu bestimmt sind, die Mittel zum Unterbrechen derart zu steuern, dass der Betrieb unterbrochen wird, wenn die Änderung der Steigung erfolgt.

9. Vorrichtung nach Anspruch 9, **dadurch gekennzeichnet, dass** die Vorrichtung Verzögerungsmittel umfasst, die dazu bestimmt sind, das Unterbrechen um eine vorbestimmte Dauer nach dem Zeitpunkt, zu dem die Änderung der Steigung erfolgte, zu verzögern.
